# EUROPEAN PATENT APPLICATION

(11) **EP 2 154 193 A1**
(43) Date of publication of application: **17.02.2010**
(21) Application number: 08740365.5
(22) Date of filing: 14.04.2008
(51) Int. Cl.: C08L 23/08, C08K 5/01, C08K 5/14, C08L 23/14

(54) **METHOD OF PRODUCING THERMOPLASTIC ELASTOMER COMPOSITION AND MOLDED ARTICLE**

(30) Priority: 25.04.2007 JP 2007115840
(71) Applicant: Mitsui Chemicals, Inc., Tokyo 105-7117 (JP)
(72) Inventor: ASAMI, Takuo, Ichihara-shi Chiba 299-0108 (JP); IMAI, Tadashi, Ichihara-shi Chiba 299-0108 (JP); JITSUKATA, Masakazu, Ichihara-shi Chiba 299-0108 (JP); NAKAHAMA, Hidenari, Sodegaura-shi Chiba 299-0265 (JP)
(74) Representative: HOFFMANN EITLE
(86) International application number: PCT/JP2008/057277
(87) International publication number: WO 2008/133083

(57) **Abstract**

[PROBLEM] To provide a process for preparing a thermoplastic elastomer composition which is inhibited from sink mark in the injection welding of a linear part and a corner part of a glass run channel and has excellent bond properties, and a molded product obtained by the use of the composition. [MEANS FOR SOLVING PROBLEM] A process for preparing a thermoplastic elastomer composition (F) for injection molding, comprising dynamically heat-treating a thermoplastic elastomer composition (D), which comprises 95 to 5 parts by weight of an ethylene/α-olefin-based copolymer rubber (a), 5 to 95 parts by weight of a propylene/α -olefin random copolymer (b-1) (total of the components (a) and (b-1): 100 parts by weight), and 0 to 200 parts by weight of a softener (c), in the presence of an organicperoxide, wherein a crystallization nucleating agent (e) for olefin-based plastics is added in an amount of 0.01 to 5 parts by weight based on 100 parts by weight of the total of the components (a) and (b-1) before or after the dynamic heat treatment.

## Description

### TECHNICAL FIELD

The present invention relates to an olefin-based thermoplastic elastomer composition for inj ectionmolding and a molded product obtained by the use of the composition.

### BACKGROUND ART

In the past, production of weatherstrips having joints has been generally carried out by cutting a vulcanized extruded product composed of a rubber compound of an ethylene/propylene/non-conjugated diene terpolymer (EPDM), setting the resulting molded products in a mold from one side or both sides, injecting a rubber molding material of the same kind as the rubber compound of EPDM into a cavity formed and subjecting the material to vulcanization molding.

As the material for this molding, a thermoplastic elastomer (composition) for which vulcanization step is unnecessary began to be used instead of a vulcanized rubber using the ethylene/propylene/non-conjugated diene terpolymer (EPDM) from the viewpoints of productivity, environmental compatibility and weight reduction. However, the vulcanized rubber and the thermoplastic elastomer cannot be generally vulcanization bonded to each other, and therefore, they are united by the use of an adhesive. However, such a method cannot be said to be satisfactory from the viewpoints of productivity and environmental resistance.

As a technique concerning composition of the thermoplastic elastomer, addition of a polar group-containing resin (see patent documents 1 to 3) can be mentioned. In the case of addition ofthepolargroup-containingresin, however, releasabilityofamolded article from the mold is deteriorated in the molding stage, and the molding cycle is prolonged. Further, a resin composition for foam molded products, which is obtained by mixing an olefin-based thermoplastic elastomer with an olefin polymer resin having a low crystallization temperature of 10 to 100°C has been also proposed, but useless marks, such as sink mark, and deformation are liable to occur after the foam molding and before cooling of the foamed product to not higher than 100°C (see patent document 4).

As a technique concerning the above vulcanized rubber, furthermore, addition of microcrystalline polypropylene in addition to a vulcanized rubber of conventional composition can be mentioned (see patent document 5). However, if microcrystalline polypropylene such as atactic polypropylene is added, not only rubber elasticity of the conventional vulcanized rubber is deteriorated but also tackiness of a molded article or increase of hardness of a molded article sometimes takes place after the lapse of time.

In addition to such techniques concerning composition of a thermoplastic elastomer or a vulcanized rubber as above, there are techniques such as a technique to obtain anchor effect by cutting a vulcanized rubber and then providing depressions and protrusions on the cut surface (see patent document 6) and a technique of applying a polyolefin resin powder onto a cut surface of a vulcanized rubber (see patent document 7), but in either case, there resides a problem that enhancement of bond properties is not found considering lowering of productivity.

On this account, development of a thermoplastic elastomer excellent in moldability in injection molding or the like, a molded product or a foamed product comprising the thermoplastic elastomer composition, a composite product wherein a molded product or a foamed product comprising the thermoplastic elastomer composition and a molded product or a foamed product comprising a publicly known vulcanized rubber or thermoplastic elastomer are joined has been desired.
Patent document 1: Japanese Patent Laid-Open Publication No. 115249/1990
Patent document 2: Japanese Patent Laid-Open Publication No. 244068/1996
Patent document 3: Japanese Patent Laid-Open Publication No. 324200/1998
Patent document 4: Japanese Patent Laid-Open Publication No. 81251/2001
Patent document 5: Japanese Patent Laid-Open Publication No. 7849/1998
Patent document 6: Japanese Patent Laid-Open Publication No. 118133/1997
Patent document 7: Japanese Patent Laid-Open Publication No. 47816/1994

### DISCLOSURE OF THE INVENTION

### PROBLEM TO BE SOLVED BY THE INVENTION

It is an object of the present invention to provide a process for preparing a thermoplastic elastomer composition capable of forming a molded product which is inhibited from sink mark in the injection welding of a linear part and a corner part of a glass run channel and has excellent bond properties, a thermoplastic elastomer composition prepared by the preparation process, a molded product or a foam molded product comprising the thermoplastic elastomer composition, and a molded product wherein a molded product or a foam molded product comprising the thermoplastic elastomer composition and a molded product or a foamed product comprising a publicly known vulcanized rubber are joined.

### MEANS TO SOLVE THE PROBLEM

The process for preparing a thermoplastic elastomer composition (F) for injection molding of the present invention comprises dynamically heat-treating a thermoplastic elastomer composition (D) comprising 95 to 5 parts by weight of an ethylene/α-olefin-based copolymer rubber (a), 5 to 95 parts by weight of a propylene/α-olefin random copolymer (b-1) (the total of said components (a) and (b-1) being 100 parts by weight), and 0 to 200 parts by weight of a softener (c), in the presence of an organic peroxide, and is **characterized in that** a crystallization nucleating agent (e) for olefin-based plastics is added in an amount of 0.01 to 5 parts by weight based on 100 parts by weight of the total of the components (a) and (b-1) before or after the dynamic heat treatment.

The thermoplastic elastomer composition (D) preferably contains the softener (c) in an amount of 1 to 200 parts by weight.

The ethylene/α-olefin-based copolymer rubber (a) is preferably a rubber having been partially or completely crosslinked.

The propylene unit content in the propylene/α-olefin random copolymer (b-1) is preferably not less than 50% by weight.

The thermoplastic elastomer composition (D) preferably further contains a propylene-based polymer (b-2) in addition to the propylene/α-olefin random copolymer (b-1).

The propylene-based polymer (b-2) is preferably a propylene homopolymer or a block copolymer of propylene and an α-olefin.

The propylene/α-olefin random copolymer (b-1) and the propylene-based polymer (b-2) are preferably contained in a weight ratio of 99-5/1-95.

The thermoplastic elastomer composition (F) for injection molding of the present invention is characterized by being prepared by the above-mentioned process for preparing a thermoplastic elastomer composition (F) for injection molding.

The molded product of the present invention is characterized by comprising the above-mentioned thermoplastic elastomer composition (F).

The molded product is preferably a foamed product.

The molded product is preferably a molded product having been joined to a vulcanized rubber molded product which may have been foamed and/or a thermoplastic elastomer molded product which may have been foamed.

The thermoplastic elastomer composition (F) for inj ectionmolding of the present invention is a thermoplastic elastomer composition (F) for injection molding, which is obtained by adding a crystallization nucleating agent (e) for olefin-based plastics to a thermoplastic elastomer composition (D) comprising 95 to 5 parts by weight of an ethylene/α-olefin-based copolymer rubber (a), 5 to 95 parts by weight of a propylene/α-olefin random copolymer (b-1) (the total of said components (a) and (b-1) being 100 parts by weight), and 0 to 200 parts by weight of a softener (c), in an amount of 0.01 to 5 parts by weight based on 100 parts by weight of the total of the components (a) and (b-1) and is characterized by having the largest peak value of a melting point, as measured by a differential scanning calorimeter (DSC), of 100 to 150°C and a crystallization temperature peak of not lower than 100°C.

The thermoplastic elastomer composition (D) preferably contains the softener (c) in an amount of 1 to 200 parts by weight.

The ethylene/α-olefin-based copolymer rubber (a) is preferably a rubber having been partially or completely crosslinked.

The propylene unit content in the propylene/α-olefin random copolymer (b-1) is preferably not less than 50% by weight.

The thermoplastic elastomer composition (D) preferably further contains a propylene-based polymer (b-2) in addition to the propylene/α-olefin random copolymer (b-1).

The propylene-based polymer (b-2) is preferably a propylene homopolymer or a block copolymer of propylene and an α-olefin.

The propylene/α-olefin random copolymer (b-1) and the propylene-based polymer (b-2) are preferably contained in a weight ratio of 99-5/1-95.

The molded product of the present invention is
characterized by comprising the above-mentioned thermoplastic elastomer composition (F).

The molded product is preferably a foamed product.

The molded product is preferably a molded product having been joined to a vulcanized rubber molded product which may have been foamed and/or a thermoplastic elastomer molded product which may have been foamed.

### EFFECT OF THE INVENTION

According to the present invention, a thermoplastic elastomer composition capable of producing an injection molded product which is inhibited from sink mark and has excellent bond/peel strength by adding a crystallization nucleating agent before or after dynamic heat treatment, and a molded product obtained by the use of the composition can be provided.

### BRIEF DESCRIPTION OF THE DRAWINGS

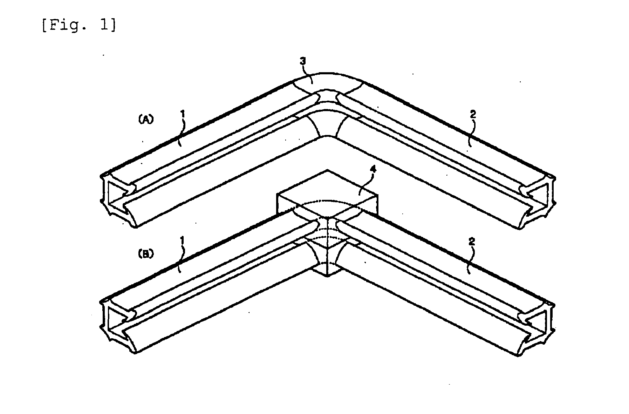

Fig. 1(A) is a schematic perspective view showing an example of an automotive weatherstrip that is a preferred embodiment of a joined molded product of the present invention, and Fig. 1(B) is a schematic perspective view to explain a method for forming a corner part of the weatherstrip.

### Description of symbols

1,2: cut extruded product
3: joining corner member (corner member)
4: mold for injection molding

### BEST MODE FOR CARRYING OUT THE INVENTION

The process for preparing a thermoplastic elastomer composition (F) for injection molding of the invention is a process for preparing a thermoplastic elastomer composition (F) for injection molding characterized by dynamically heat-treating a thermoplastic elastomer composition (D) comprising an ethylene/α-olefin-based copolymer rubber (a), a propylene/α-olefin random copolymer (b-1) and a softener (c) in the presence of an organic peroxide, and is characterized by adding a crystallization nucleating agent (e) for olefin-based plastics before or after the dynamic heat treatment.

The present invention is described in detail hereinafter.

### Thermoplastic elastomer composition (D)

The thermoplastic elastomer composition (D) for use in the invention comprises an ethylene/α-olefin-based copolymer rubber (a), a propylene/α-olefin random copolymer (b-1) and a softener (c). These components are described below in detail.

### Ethylene/α-olefin-based copolymer rubber (a)

Although the ethylene/α-olefin-based copolymer rubber (a) for use in the invention is not specifically restricted, an ethylene/α-olefin copolymer rubber, an ethylene/α-olefin/non-conjugated polyene copolymer rubber, etc. can be given as examples.

Although the ethylene unit content in the ethylene/α-olefin-based copolymer rubber (a) is not specifically restricted, it is in the range of usually 25 to 95% by mol, preferably 30 to 90% by mol, more preferably 35 to 85% by mol. Examples of the α-olefins include α-olefins of 3 to 20 carbon atoms, and propylene is particularly preferable.

Examples of the non-conjugated polyenes include chain non-conjugated dienes, such as 1,4-hexadiene, 3-methyl-1,4-hexadiene, 4-methyl-1,4-hexadiene, 5-methyl-1,4-hexadiene, 4,5-dimethyl-1,4-hexadiene, 7-methyl-1,6-octadiene, 8-methyl-4-ethylidene-1,7-nonadiene and 4-ethylidene-1,7-undecadiene; cyclic non-conjugated dienes, such as methyltetrahydroindene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene, 5-vinyl-2-norbornene, 5-isopropenyl-2-norbornene, 5-isobutenyl-2-norbornene, cyclopentadiene and norbornadiene; and trienes, such as 2,3-diisopropylidene-5-norbornene, 2-ethylidene-3-isopropylidene-5-norbornene, 2-propenyl-2,2-norbornadiene and 4-ethylidene-8-methyl-1,7-nonadiene. Of these, 5-ethylidene-2-norbornene, 5-vinyl-2-norbornene, cyclopentadiene and 4-ethylidene-8-methyl-1,7-nonadiene are preferable, and 5-ethylidene-2-norbornene is particularly preferable.

In the case of the ethylene/α-olefin/non-conjugated polyene copolymer rubber, the iodine value is in the range of preferably 1 to 30 g/100 g, more preferably 3 to 25 g/100 g. The Mooney viscosity (ML₁₊₄, 100°C) is in the range of preferably 10 to 250. That is to say, the ethylene/α-olefin-based copolymerrubber (a) may have been partially or completely crosslinked. In the case where the ethylene/α-olefin-based copolymer rubber (a) has been partially or completely crosslinked, it exhibits rubber elasticity, so that such a case is preferable.

The ethylene/α-olefin-based copolymer rubber (a) can be prepared by a polymerization process hitherto publicly known.

### Propylene/α-olefin random copolymer (b-1)

The propylene/α-olefin random copolymer (b-1) (also referred to as "propylene-based copolymer (b-1) "hereinafter) is a resin having a propylene unit as a main component, and is a high-molecular weight solid product obtained by copolymerizing propylene and one or more α-olefins through any one of a high-pressure process and a low-pressure process. Typical resins thereof are also commercially available.

Suitable examples of the α-olefins of the propylene-based copolymers (b-1) include α-olefins of 2 and 4 to 20 carbon atoms, preferably α-olefins of 2 and 4 to 12 carbon atoms, such as ethylene, 1-butene, 1-pentene, 1-hexene, 1-octene, 1-decene, 2-methyl-1-propene, 3-methyl-1-pentene, 4-methyl-1-pentene and 5-methyl-1-hexene. These α-olefins may be used singly or may be used in combination of two or more kinds.

The propylene unit content in the propylene-based copolymer (b-1) is not less than 50% by weight, preferably 60 to 99% by weight, more preferably 70 to 99% by weight, and the content of the α-olefin that is a comonomer is preferably not more than 50% by weight, more preferably 1 to 40% by weight.

As previously described, the propylene/α-olefin random copolymer (b-1) is preferably a resin having a propylene unit as a main component, that is, a propylene-based polymer. Examples of such polymers include an ethylene/propylene random copolymer and an ethylene/propylene/butene random copolymer. Of these, an ethylene/propylene random copolymer is preferable. These copolymers are more preferably crystalline.

The melt flow rate (MFR, ASTM D 1238-65T, 230°C, load of 2.16 kg) of the propylene-based copolymer (b-1) is desired to be in the range of usually 0.01 to 100 g/10 min, preferably 0.05 to 50 g/10 min. The propylene-based copolymer (b-1) has a function of enhancing flowability of the thermoplastic elastomer composition (F) of the invention to thereby increase bond/peel strength to the adherend.

### Preparation process

The propylene/α-olefin random copolymer (b-1) can be prepared by a process for preparing a hitherto publicly known propylene (co) polymer. Examples of such propylene/α-olefin random copolymers (b-1) include a crystalline propylene/ethylene copolymer, a crystalline propylene/ethylene/1-butene copolymer, a crystalline propylene/1-butene copolymer, a propylene/1-octene copolymer and a propylene/1-hexene copolymer. Of these, a crystalline propylene/ethylene copolymer and a crystalline propylene/ethylene/1-butene copolymer are preferable.

### Propylene-based polymer (b-2)

In the present invention, a propylene-based polymer (b-2) other than the propylene/α-olefin random copolymer (b-1) (referred to as a "propylene-based polymer (b-2)" simply hereinafter) may be used in addition to the propylene/α-olefin random copolymer (b-1). As thepropylene-basedpolymers (b-2) for use in the invention, copolymers other than the aforesaid propylene-based copolymers (b-1) can be mentioned without any restriction. Above all, a propylene homopolymer and a block copolymer of propylene and an α-olefin are preferably used, and as the α-olefin, ethylene is particularly preferably used.

The melt flow rate (MFR, ASTM D 1238-65T, 230°C, load of 2.16 kg) of the propylene-based copolymer (b-2) is in the range of usually 0.01 to 100 g/10 min, preferably 0.05 to 50 g/10 min.

In the thermoplastic elastomer composition (D) for use in the invention, the propylene/α-olefin random copolymer (b-1) and the propylene-based copolymer (b-2) are desirably contained in a weight ratio of 99-5/1-95, preferably a weight ratio of 99-30/1-70, more preferably a weight ratio of 99-50/1-50.

By incorporating the propylene-based polymer (b-2), the thermoplastic elastomer composition (D) for use in the invention is inhibited from occurrence of sink mark in the injection molding stage and is excellent in moldability.

### Softener (c)

Examples of the softeners (c) include petroleum-based softeners, such as process oil, lubricating oil, paraffin, liquid paraffin, petroleum asphalt and vaseline; coal tar-based softeners, such as coal tar and coal tar pitch; fatty oil type softeners, such as castor oil, rapeseed oil, soybean oil and coconut oil; waxes, such as tall oil, beeswax, carnauba wax and lanoline; fatty acids or metal salts thereof, such as ricinolic acid, palmitic acid, stearic acid, barium stearate and calcium stearate; naphthenic acid or metallic soap thereof; pine oil, rosin or derivatives thereof; synthetic high-molecular substances, such as terpene resin, petroleum resin, coumarone indene resin and atactic polypropylene; ester-based plasticizers, such as dioctyl phthalate, dioctyl adipate and dioctyl sebacate; carbonic acid ester-based plasticizers, such as diisododecyl carbonate; and others, such as microcrystalline wax, factice, liquid polybutadiene, modified liquid polybutadiene, liquid Thiokol and hydrocarbon-based synthetic lubricating oils. Of these, preferable are petroleum-based softeners and hydrocarbon-based synthetic lubricating oils.

### Other arbitrary components

To the thermoplastic elastomer composition (D) for use in the invention, publicly known additives, such as filler, heat stabilizer, anti-aging agent, weathering stabilizer, antistatic agent, lubricant (e.g., metallic soap and wax), pigment, dye, flame retardant and anti-blocking agent, may be added when necessary, within limits not detrimental to the object of the present invention.

As the filler, a filler other than the aforesaid crystallization nucleating agent (e), which is usually used for rubbers, is suitable, and examples thereof include carbon black, calcium carbonate, calcium silicate, clay, kaolin, diatomaceous earth, mica powder, asbestos, barium sulfate, aluminum sulfate, calcium sulfate, magnesium carbonate, molybdenum disulfide, glass fiber, glass bulb, Shirasu balloon, graphite and alumina.

The filler is used in an amount of 0 to 10 parts by weight, preferably 0 to 5 parts by weight, based on 100 pars by weight of the thermoplastic elastomer composition (D).

Examples of the publicly known heat stabilizers, anti-aging agents and weathering stabilizers which are used in the invention when necessary include phenol-based, sulfite-based, phenylalkane-based, phosphite-based and amine-based stabilizers.

### Thermoplastic elastomer composition (D)

In the thermoplastic elastomer composition (D) for use in the invention, the ratio between the ethylene/α-olefin-based copolymer rubber (a) and the propylene/α-olefin random copolymer (b-1) used is as follows. Based on 100 parts by weight of the total of the ethylene/α-olefin-based copolymer rubber (a) and the propylene/α-olefin random copolymer (b-1), the amount of the ethylene/α-olefin-based copolymer rubber (a) is in the range of 95 to 5 parts by weight, preferably 95 to 10 parts by weight, and the amount of the propylene/α-olefin random copolymer (b-1) is in the range of 5 to 95 parts by weight, preferably 5 to 90 parts by weight. When the amount of the ethylene/α-olefin-based copolymer rubber (a) and the amount the propylene/α-olefin random copolymer (b-1) are in the above ranges, a thermoplastic elastomer composition of the invention excellent not only in flexibility and rubber elasticity but also in molding processability is obtained.

In the thermoplastic elastomer composition (D) for use in the invention, the softener (C) is contained in an amount of 0 to 200 parts by weight, preferably 1 to 200 parts by weight, more preferably 1 to 180 parts by weight, based on 100 parts by weight of the total of the ethylene/α-olefin-based copolymer rubber (a) and the propylene/α-olefin random copolymer (b-1). When the amount of the softener (C) is in the above range, the thermoplastic elastomer composition exhibits flexibility, so that such an amount is preferable.

### Thermoplastic elastomer composition (F)

The thermoplastic elastomer composition (F) of the invention is obtained by dynamically heat-treating the above-mentioned thermoplastic elastomer composition (D) in the presence of an organic peroxide, and is characterized by adding a crystallization nucleating agent (e) for olefin-based plastics in an amount of 0.01 to 5 parts by weight based on 100 parts by weight of the thermoplastic elastomer composition (D) excluding the softener (c) before or after the dynamic heat treatment.

### Crystallization nucleating agent (e)

As the crystallization nucleating agents (e) for use in the invention, crystallization nucleating agents for olefin-based plastics of non-melting type and melting type can be mentioned, and they can be used singly or in combination of two or more kinds.

Examples of the crystallization nucleating agents of non-melting type include inorganic substances, such as talc, mica, silica and aluminum, brominated biphenyl ether, aluminum hydroxydi(p-t-butylbenzoate) (TBBA), aluminum hydroxy-di-p-t-butylbenzoate, organic phosphate, rosin-based crystallization nucleating agent, substituted triethylene glycol terephthalate and Terylene & Nylon fibers. In particular, aluminum hydroxy-di-p-t-butylbenzoate, sodium methylenebis(2,4-di-t-butylphenyl)phosphate, sodium 2,2'-methylenebis(4,6-di-t-butylphenyl)phosphate, rosin-based crystallization nucleating agent and PDTS are desirable.

Examples of the crystallization nucleating agents of melting type include sorbitol-based compounds, such as dibenzylidene sorbitol (DBS), substituted DBS, lower alkyldibenzylidene sorbitol (PDTS) and bis(4-methylbenzylidene)sorbitol.

The crystallization nucleating agent (e) is used in order to allow the crystallization time and the crystallinity to be in the optimum ranges. The content of the crystallization nucleating agent (e) is in the range of 0.01 to 5 parts by weight, preferably 0.02 to 4.5 parts by weight, based on 100 parts by weight of the total of the ethylene/α-olefin-based copolymer rubber (a) and the propylene/α-olefin random copolymer (b-1).

### Other components

To the thermoplastic elastomer composition (F) of the invention, the same components as already stated as the arbitrary components of the thermoplastic elastomer composition (D) can be added within limits not detrimental to the object of the present invention.

### Thermoplastic elastomer composition (F)

The largest peak value of a melting point (Tm) of the thermoplastic elastomer composition (F) of the invention, as observed when thermal analysis is carried out by the use of a differential scanning calorimeter (DSC) under the measuring conditions of JIS K7121, is in the range of 100 to 150°C, preferably 105 to 150°C, more preferably 110 to 150°C, and the peak of the crystallization temperature is desired to be not lower than 100°C, preferably 100 to 150°C, more preferably 100 to 140°C. When the largest peak value of a melting point (Tm) and the crystallization temperature of the thermoplastic elastomer composition (F) are in the above ranges, the composition exhibits high bond properties and is free from occurrence of sink mark, so that such ranges are preferable.

### Process for preparing thermoplastic elastomer composition (F) for injection molding

The thermoplastic elastomer composition (F) of the invention is obtained by dynamically heat-treating the thermoplastic elastomer composition (D) containing the ethylene/α-olefin-based copolymer rubber (a), the propylene/α-olefin random copolymer (b-1), the softener (c), and if necessary, the propylene-based polymer (b-2) and other arbitrary components, in the presence of a crosslinking agent. The ethylene/α-olefin-based copolymer rubber (a) and the propylene/α-olefin random copolymer (b-1) may be mixed after the ethylene/α-olefin-based copolymer rubber (a) is first crosslinked alone, or after the ethylene/α-olefin-based copolymer rubber (a) and the propylene/α-olefin random copolymer (b-1) are mixed, the mixture may be crosslinked. The expression "dynamically heat-treating" used herein means that the ethylene/α-olefin-based copolymer rubber (a) and the propylene/α-olefin random copolymer (b-1) are kneaded in a molten state.

It is preferable that the crystallization nucleating agent (e) is added after the thermoplastic elastomer composition (D) is obtained and before or after the dynamic heat treatment is carried out. When the crystallization nucleating agent (e) is added after the thermoplastic elastomer composition (D) is obtained and before or after the dynamic heat treatment is carried out, occurrence of sink mark is inhibited in the injection molding stage, and for example, in the injection welding of a linear part and a corner part of a glass run channel, bond strength between them is enhanced.

Examples of the crosslinking agents used in the dynamic heat treatment include crosslinking agents generally used for thermosetting rubbers, such as organic peroxide, phenolic resin, sulfur, hydrosilicone compound, amino resin, quinone or its derivative, amine-based compound, azo-based compound, epoxy-based compound and isocyanate. Of these crosslinking agents, organic peroxide is preferable.

Examples of the organic peroxides include dicumyl peroxide, di-t-butyl peroxide,
2,5-dimethyl-2,5-di-(t-butylperoxy)hexane,
2,5-dimethyl-2,5-di-(t-butylperoxy)hexyne-3,
1,3-bis(t-butylperoxyisopropyl)benzene,
1,1-bis(t-butylperoxy)-3,3,5-trimethylcyclohexane,
n-butyl-4,4-bis(t-butylperoxy)valerate, benzoyl peroxide, p-chlorobenzoyl peroxide, 2,4-dichlorobenzoyl peroxide, t-butyl peroxybenzoate, t-butyl perbenzoate, t-butylperoxyisopropyl carbonate, diacetyl peroxide, lauroyl peroxide and t-butylcumyl peroxide.

Of these, preferable are
2,5-dimethyl-2,5-di-(t-butylperoxy)hexane,
2,5-dimethyl-2,5-di-(t-butylperoxy)hexyne-3 and
1,3-bis(t-butylperoxyisopropyl)benzene, and particularly preferable is 2,5-dimethyl-2,5-di-(t-butylperoxy)hexane, from the viewpoints of odor and scorch stability.

Such an organic peroxide is used in an amount of 0.02 to 3 parts by weight, preferably 0.05 to 1 part by weight, based on 100 parts by weight of the total of the ethylene/α-olefin-based copolymer rubber (a) and the propylene/α-olefin random copolymer (b-1). When the amount of the organic peroxide added is in the above range, proper crosslinking proceeds, and therefore, a thermoplastic elastomer composition (F) excellent in heat resistance, tensile properties, elastic recovery, impact resilience, moldability, etc. is obtained.

In the present invention, peroxy crosslinking assistants, such as sulfur, p-quinonedioxime, p,p'-dibenzoyl quinonedioxime, N-methyl-N-4-dinitrosoaniline, nitrosobenzene, diphenylguanidine and trimethylolpropane-N,N'-m-phenylene dimaleimide; divinylbenzene; triallyl cyanurate; polyfunctional methacrylate monomers, such as ethylene glycol dimethacrylate, diethylene glycol dimethacrylate, polyethyleneglycoldimethacrylate, trimethylolpropane trimethacrylate and allyl methacrylate; and polyfunctional vinyl monomers, such as vinyl butyrate and vinyl stearate, can be added in the crosslinking treatment with the organic peroxide.

When such a compound as above is used, uniform and relaxed crosslinking reaction can be expected.

The compound such as the above-mentioned crosslinking assistant or polyfunctional vinyl monomer is used in an amount of not more than 2 parts by weight, preferably 0.03 to 1 part by weight, based on 100 parts by weight of the thermoplastic elastomer (D).

In order to accelerate decomposition of the organic peroxide, decomposition accelerators, e.g., tertiary amines, such as triethylamine, tributylamine and 2, 4, 6-tri (dimethylamino) phenol, and naphthenates of aluminum, cobalt, vanadium, copper, calcium, zirconium, manganese, magnesium, lead and mercury, may be used.

The dynamic heat treatment in the invention is preferably carried out in a non-open type apparatus and is preferably carried out in an atmosphere of an inert gas such as nitrogen or a carbonic acid gas. The temperature of the heat treatment is in the range of the melting point of the olefin-based resin and 300°C, preferably 150 to 250°C, more preferably 170 to 225°C. The kneading time is in the range of 1 to 20 minutes, preferably 1 to 10 minutes. The shear force applied is in the range of 10 to 50, 000 sec⁻¹, preferably 100 to 20,000 sec⁻¹, in terms of shear rate.

As the kneading apparatus, a mixing roll, an intensive mixer (e.g., Banbury mixer or kneader), a single screw or twin-screw extruder, or the like is employable. However, a non-open type apparatus is preferable, and a twin-screw extruder is particularly preferable.

In the thermoplastic elastomer (D) of the invention containing the ethylene/α-olefin-based copolymer rubber (a), the propylene/α-olefin random copolymer (b-1) and the softener (c), the degree of crosslinking of the ethylene/α-olefin-based copolymer rubber (a) is not less than 90% by weight, preferably not less than 95% by weight, more preferably 97 to 99.9% by weight. The degree of crosslinking of the ethylene/α-olefin-based copolymer rubber (a) is determined from a relationship between the ethylene/α-olefin-based copolymer rubber (a) and a gel fraction.

### Molded product, foamed product

The molded product of the invention is produced from the thermoplastic elastomer composition (F). As the process for producing the molded product, that is, the method for molding the thermoplastic elastomer composition (F), injection molding method is used. However, the method employable is not limited to the injection molding, and a publicly known method is employed.

The foamed product (also referred to as a "foam molded product" hereinafter) of the invention is produced from a thermoplastic elastomer composition obtained by adding 0.01 to 5 parts by weight of a blowing agent to 100 parts by weight of the thermoplastic elastomer composition (F). Production of the foam molded product is carried out by a publicly known process using a blowing agent that is usuallyused for producing a foamedproduct of a rubber or an elastomer. Examples of the blowing agents include inorganic blowing agents, such as sodium bicarbonate (sodium hydrogen carbonate), sodium carbonate, ammonium bicarbonate, ammonium carbonate and ammonium nitrite; nitroso compounds, such as N,N'-dimethyl-N,N'-dinitrosoterephthalamide and N,N'-dinitrosopentamethylenetetramine (DPT); azo compounds, such as azodicarbonamide (ADCA), azobisisobutyronitrile (AZBN), azobiscyclohexylnitrile, azodiaminobenzene and barium azodicarboxylate; sulfonylhydrazide compounds, such as benzenesulfonylhydroazide (BSH), toluenesulfonylhydrazide (TSH), p,p'-oxybis(benzenesulfonylhydrazide) (OBSH) and diphenylsulfone-3,3'-disulfonylhydrazide;and azide compounds, such as calcium azide, 4, 4-diphenyldisulfonyl azide and p-toluenesulfonyl azide.

The molded product and the foam molded product may be each joined to a joining target, such as a vulcanized rubber molded product which may have been foamed and/or a thermoplastic elastomer molded product which may have been foamed.

### Joining target

As the joining targets of the molded product or the foam molded product of the invention, a vulcanized rubber and a thermoplastic elastomer are employed. The vulcanized rubber and the thermoplastic elastomer are described below.

### Vulcanized rubber

As the vulcanized rubber that is a joining target of the molded product or the foammolded product of the invention, a polyolefin-based rubber is preferably used from the viewpoint of bond properties (weldability) to the thermoplastic elastomer composition (F). Examples of the polyolefin-based rubbers include an ethylene/α-olefin copolymer rubber and an ethylene/α-olefin/non-conjugated polyene copolymer rubber.

The "vulcanized rubber" referred to herein includes not only a rubber having been crosslinked by the use of sulfur but also a rubber having been crosslinked by the use of other crosslinking agents.

As such a vulcanized rubber, a rubber containing an ethylene/α-olefin/non-conjugated polyene copolymer rubber as a main component is preferably used. Examples of the α-olefins in the ethylene/α-olefin/non-conjugated polyene copolymer rubber include α-olefins of 3 to 20 carbon atoms, preferably, propylene, 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyldecene-1,11-methyldodecene-1 and 12-ethyltetradecene-1. Of these, α-olefins of 3 to 8 carbon atoms, specifically, propylene, 1-butene, 4-methylpentene-1, 1-hexene and 1-octene, are particularly preferably used. These α-olefins may be used singly or may be used in combination of two or more kinds.

In order to obtain a vulcanized rubber extruded product having sufficient mechanical strength, it is preferable to use carbon black in an amount of 30 to 300 parts by weight based on 100 parts by weight of the ethylene/α-olefin/non-conjugated polyene copolymer rubber, in the vulcanized rubber. Examples of carbon black include carbon black of SRF, GPF, FEF, MAF, HAF, ISAF, SAF, FT, MT, etc. In order to produce a vulcanized rubber molded product excellent in mechanical strength and article surface texture, the nitrogen adsorption specific surface area of the carbon black is preferably in the range of 10 to 100 m²/g.

To the vulcanized rubber, an inorganic filler may be appropriately added as a reinforcing agent, and the amount which can be added is a maximum of 100 parts by weight based on 100 parts by weight of the ethylene/α-olefin/non-conjugated polyene copolymer rubber. Examples of the inorganic fillers include silica, soft calcium carbonate, heavy calcium carbonate, talc and clay.

The softener which can be incorporated into the vulcanized rubber is not specifically restricted provided that it is a softener usually used for rubbers. Examples of the softeners include petroleum-based softeners, such as process oil, lubricating oil, paraffin, liquid paraffin, polyethylene wax, polypropylene wax, petroleum asphalt and vaseline; coal tar-based softeners, such as coal tar and coal tar pitch; fatty oil type softeners, such as castor oil, linseed oil, rapeseed oil, soybean oil and coconut oil; tall oil; factice; waxes, such as beeswax, carnauba wax and lanoline; fatty acids or fatty acid salts, such as ricinolic acid, palmitic acid, stearic acid, barium stearate, calcium stearate and zinc laurate; naphthenic acid; pine oil, rosin or derivatives thereof; synthetic high-molecular substances, such as terpene resin, petroleum resin, coumarone indene resin and atactic polypropylene; ester-based softeners, such as dioctyl phthalate, dioctyl adipate and dioctyl sebacate; and microcrystalline wax, liquid polybutadiene, modified liquid polybutadiene, liquid polyisoprene, end modified polyisoprene, hydrogenated end modified polyisoprene, liquid Thiokol and hydrocarbon-based synthetic lubricating oils. Of these, the petroleum-based softener, particularly process oil, is preferable. The amount of the softener added is appropriately selected according to the use purpose of the vulcanized product.

As the vulcanizing agents used in the vulcanization of a vulcanized rubber, sulfur and sulfur compounds can be mentioned. Examples of the sulfur include powdery sulfur, precipitated sulfur, colloidal sulfur, surface-treated sulfur and insoluble sulfur. Examples of the sulfur compounds include sulfur chloride, sulfur dichloride and high-molecular polysulfides. Further, sulfur compounds which release activated sulfur at the vulcanization temperature to vulcanize the rubber, such as morpholine disulfide, alkylphenol disulfide, tetramethylthiuram disulfide, dipentamethylenethiuram tetrasulfide and selenium dimethyldithiocarbamate, may be also used. Of these, sulfur is preferably used. The sulfur or the sulfur compound is used in an amount of usually 0.1 to 10 parts by weight based on 100 parts by weight of the copolymer rubber.

When the sulfur or the sulfur compound is used as the vulcanizing agent, it is preferable to use a vulcanization accelerator in combination. Examples of the vulcanization accelerators include sulfenamide-based compounds, such as N-cyclohexyl-2-benzothiazole sulfenamide (CBS), N-oxydiethylene-2-benzothiazole sulfenamide (OBS), N-t-butyl-2-benzothiazole sulfenamide (BBS) and N,N-diisopropyl-2-benzothiazole sulfenamide; thiazole-based compounds, such as 2-mercaptobenzothiazole (MBT), 2-(2,4-dinitrophenyl)mercaptobenzothiazole, 2-(4-morpholinothio)benzothiazole, 2-(2,6-diethyl-4-morpholinothio)benzothiazole and dibenzothiazyl disulfide; guanidine-based compounds, such as diphenylguanidine (DPG), triphenylguanidine, diorthonitrileguanidine (DOTG), orthotolylbiguanide and diphenylguanidine phthalate; aldehyde-amine-based or aldehyde-ammonia-based compounds, such as acetaldehyde-aniline condensate, butyraldehyde-aniline condensate, hexamethylenetetramine (H) and acetaldehyde ammonia; imidazoline-based compounds, such as 2-mercaptoimidazoline; thiourea-based compounds, such as thiocarbanilide, diethylthiourea (EUR), dibutylthiourea, trimethylthiourea and diorthotolylthiourea; thiuram-based compounds, such as tetramethylthiuram monosulfide (TMTM), tetramethylthiuram disulfide (TMTD), tetraethylthiuram disulfide, tetrabutylthiuram disulfide, tetrakis(2-ethylhexyl)thiuram disulfide (TOT) and dipentamethylenethiruam tetrasulfide (TRA); dithiocarbamates, such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate and tellurium dimethyldithiocarbamate; xanthates, such as zinc dibutylxanthate; and zinc white (zinc oxide). The vulcanization accelerator is used in an amount of usually 0.1 to 20 parts by weight based on 100 parts by weight of the copolymer rubber.

In the vulcanized rubber, hitherto publicly known additives, such as anti-aging agent, processing aid, blowing agent, blowing assistant, colorant, dispersing agent and flame retardant, can be contained according to the use purpose of the vulcanized product.

Examples of the anti-aging agents which may be added to the vulcanized rubber include amine-based, hindered phenol-based and sulfur-based anti-aging agents. Examples of the amine-based anti-ageing agents include diphenylamines and phenylenediamines. As the hindered phenol-based anti-aging agents, monoester type hindered phenols, polycyclic hindered phenols, etc. are used. As the sulfur-based anti-aging agents, sulfur-based anti-aging agents usually used for rubbers are used. These anti-aging agents are used within limits not detrimental to the object of the present invention.

As the processing aids, those usually used for processing rubbers are used. Examples of such processing aids include higher fatty acids, such as linoleic acid, ricinolic acid, stearic acid, palmitic acid and lauric acid; and salts or esters of higher fatty acids, such as barium stearate, zinc stearate and calcium stearate. The processing aid is used in an amount of usually not more than 10 parts by weight based on 100 parts by weight of the ethylene/α-olefin/non-conjugated polyene copolymer rubber, but the optimum amount is appropriately determined according to the property values required.

As the blowing agents, there can be mentioned those identical with the blowing agents which can be used for producing a foamed product from the thermoplastic elastomer composition (F) of the invention.

Further, a variety of publicly known other rubbers or resins can be blended with the components of the vulcanized rubber. Examples of other rubbers publicly known include isoprene-based rubbers, such as natural rubber (NR) and isoprene rubber (IR); and conjugated diene-based rubbers, such as butadiene rubber (BR), styrene-butadiene rubber (SBR), acrylonitrile-butadiene rubber (NBR) and chloroprene rubber (CR). Examples of other resins include polyethylene, polypropylene, 1,2-polybutadiene and polybutene.

### Thermoplastic elastomer

Examples of the thermoplastic elastomers which are joining targets of the molded product or the foammoldedproduct of the invention include olefin-based, styrene-based, vinyl chloride-based, urethane-based, ester-based or amide-based thermoplastic elastomers, compositions comprising one or more of the thermoplastic elastomers, and elastomers containing olefin-based resins or crosslinked olefin-based rubbers. The joining target can be appropriately selected according to the properties required for the desired molded product.

### Rubber composition and production of vulcanized rubber molded product

The vulcanized rubber molded product is produced by kneading the rubber composition containing the ethylene/α-olefin/non-conjugated polyene copolymer rubber, carbon black, a rubber reinforcing agent, an inorganic filler, a softener, etc. by the use of internal mixers (closed type mixing machines), such as Banbury mixer, kneader and intermixer, at a temperature of 80 to 170°C for 2 to 20 minutes, then introducing sulfur, and if necessary, a vulcanization accelerator, a vulcanization assistant, a blowing agent and a blowing assistant into the kneading machine, then kneading them by the use of rolls, such as open rolls, or a kneader at a roll temperature of 40 to 80°C for 5 to 30 minutes and then sheeting.

Vulcanization can be carried out when the rubber composition is molded into a desired shape by the use of an extruder or when the molded product is introduced into a vulcanizing bath and heated at a temperature of 140 to 300°C for 1 to 20 minutes. The vulcanization process is usually carried out continuously. Examples of heating methods in the vulcanizing bath include methods of hot air, glass bead fluidized bed, molten salt bath (LCM), PCM (powder curing medium or powder curing method), UHF (ultrahigh frequency electromagnetic wave) and steam.

The present invention has been described so far taking a weatherstrip as an example. However, the thermoplastic elastomer composition (F) of the invention is preferably used not only for producing a molded product to which a molded product of a vulcanized rubber and/or a thermoplastic elastomer has been fusion bonded but also for producing a skin layer to which a skin part has been fusion bonded, such as door trim.

### Molded product

The molded product of the invention is obtained by joining a molded product or a foam molded product obtained from the thermoplastic elastomer composition (F) to a vulcanized rubber molded product which may have been foamed and/or a thermoplastic elastomer molded product which may have been foamed.

The thermoplastic elastomer composition (F) of the invention is excellent in joining performance (fusion bond properties) to a molded product of a vulcanized rubber and/or a thermoplastic elastomer, which is a joining target. Hence, the molded product obtained from the thermoplastic elastomer composition (F) and the molded product of a vulcanized rubber and/or a thermoplastic elastomer, which is a joining target, can be firmly joined to each other by a method of thermocompression bonding or the like, even if an adhesive is not used. That is to say, the molded product of the invention can be produced by joining a molded product or a foam molded product obtained from the thermoplastic elastomer composition (F) to a molded product (joining target) of a vulcanized rubber and/or a thermoplastic elastomer, which may have been foamed, by a method of thermocompression bonding or the like.

An example of such a molded product of the invention is a corner part wherein the thermoplastic elastomer composition (F) has been welded with a vulcanized rubber molded product (preferably polyolefin-based vulcanized rubber molded product) that is used as an interior or exterior trim part of a vehicle, e.g., a composite product (molded product) used for a corner portion (corner material) of an automotive weatherstrip.

The molded product is described below taking, as an example, a weatherstrip obtained by molding the thermoplastic elastomer composition (F) of the invention. In the formation of a corner portion comprising cutting an extruded product of a vulcanized rubber and/or a thermoplastic elastomer and connecting the thus cut extruded products to each other from the different directions, the thermoplastic elastomer composition (F) is injection molded at a temperature of not lower than the melting point, then brought into contact with an extruded product of a vulcanized rubber and/or a thermoplastic elastomer and welded with the extruded product, whereby a weatherstrip can be produced.

The weatherstrip having a corner part molded product composed of the thermoplastic elastomer composition (F) of the invention is more specifically described with reference to Fig. 1. Fig. 1 is a group of schematic perspective views to explain an automotive weatherstrip (glass run channel) and a molding method for it. As shown in Fig. 1(A), the weatherstrip is constituted of cut extruded products 1, 2 of a vulcanized rubber and/or a thermoplastic elastomer and a joining corner member 3 that is formed when the cut extruded products 1, 2 are connected from the different directions. The cut extruded products 1, 2 are those obtained by extruding a vulcanized rubber and/or a thermoplastic elatstomer into a shape of a channel and cutting the extrudate into pieces of given length. These cut extruded products 1, 2 are each linear in the longer direction. The "joining corner member" referred to herein is a part made of the thermoplastic elastomer composition, which is formed when the cut extruded products are connected to each other from the different directions.

Such a weatherstrip can be prepared in the following manner. First, a mold 4 for injection molding is previously heated to a given temperature. Next, the cut extruded products 1, 2 made of a vulcanized rubber and/or a thermoplastic elastomer are inserted intothemold4, as shown in Fig. 1(B). Subsequently, the thermoplastic elastomer composition (F) of the invention having been melted at a temperature of not lower than the melting point in a heating chamber (in a screw) is injected into a space formed between a cavity and a core of the mold 4 to weld the thermoplastic elastomer composition (F) having been melted at a temperature of not lower than the melting point with the end surfaces of the cut extruded products 1, 2 and then cooled, though this is not shown in the figure. Thus, a weatherstrip having such a corner member 3 as shown in fig. 1(A) is obtained.

The molded product of the invention is preferably used as a molded product wherein a foamed product (foam molded product) obtained from the thermoplastic elastomer composition (F) and a vulcanized rubber foamed product and/or a thermoplastic elastomer are joined to each other (also referred to as a "jointed molded product" simply hereinafter).

The foamed product which is used as a joining target to be joined to the foamed product obtained from the thermoplastic elastomer composition (F) of the invention is obtained from a vulcanized rubber and/or a thermoplastic elastomer. As such vulcanized rubber and thermoplastic elastomer, those identical with the vulcanized rubber and the thermoplastic elastomer for forming the molded product of the invention are used. The foamed product that is a joining target is obtained by subjecting a composition containing the vulcanized rubber and/or the thermoplastic elastomer, a blowing agent, and if necessary, a blowing assistant to foammolding.

The foam molded product of the invention can be preferably produced by thermocompression bonding or fusion bonding a foamed product obtained from the thermoplastic elastomer composition (F) of the invention to a vulcanized rubber foamed product and/or a thermoplastic elastomer foamed product, even if an adhesive is not present between them. That is to say, the foamed product part obtained from the thermoplastic elastomer composition (F) and the vulcanized rubber foamed product part and/or the thermoplastic elastomer foamed product part, which constitute the joined molded product of the invention, are firmly joined to each other.

### EXAMPLES

The present invention is further described with reference to the following examples, but it should be construed that the invention is in no way limited to those examples.

Melt flow rate (MFR) of thermoplastic elastomer resin compositions obtained in the examples and the comparative examples, and hardness, tensile strength, elongation, compression set, moldability (evaluate of sink mark), bond/peel strength of molded products composed of thermoplastic elastomer compositions obtained in the examples and the comparative examples are measured or evaluated in accordance with the following methods.

### (1) Melt flow rate (MFR)

Melt flow rate was measured at 230°C under a load of 2.16 kg in accordance with ASTM D 1238-65T.

### (2) Hardness

Hardness was evaluated in the following manner. A sheet was prepared by a press molding machine, and immediately after an indenter point was bought into contact with the sheet by the use of an A-type measuring device, the scale was read to determine Shore A hardness, in accordance with JIS K6301.

### (3) Tensile strength and elongation

A sheet was prepared by a press molding machine, then a JIS No. 3 specimen was punched from the sheet, and the specimen was subj ected to tensile test under the conditions of a stress rate of 200 mm/min to measure tensile strength and elongation at break, in accordance with JIS K6301.

### (4) Compression set

Compression set was evaluated in the following manner. A cylindrical molded product having a diameter of 29 mm and a thickness of 12.7 mm was prepared by a vertical injection molding machine. In accordance with JIS K6301, a sample obtained by compressing the molded product by 25% in the thickness direction under the conditions of 70°C and 22 hours was measured on the thickness, and a compression set was calculated.

### (5) Moldability: evaluation of sink mark

A flat plate of length 12 cm × width 15 cm × thickness 5 mm was produced by a 100-ton injection molding machine at an injection temperature of 250°C and a mold temperature of 50°C, and the molded product was visually observed and evaluated by the following criteria.
A: Sink mark does not occur at all.
B: Some sink marks occur.
C: Marked sink marks are observed on the molded product surface.

### (6) Bond/peel strength

In the measurement of bond/peel strength, a mold for producing a flat plate (length 12 cm × width 14.7 cm × thickness 2 mm) and a 100-ton injection molding machine were used. As an adherend, a thermoplastic elastomer (TPV-1) (Shore A hardness: 70) was used, and a flat plate (length 12 cm × width 14.7 cm × thickness 2 mm) was prepared by molding the thermoplastic elastomer through hot press molding. Just before bonding to a corner material, the adherendmolded product was cut with a cutter so that the length would become 4 cm, and the molded product was set in a mold so that the molten resin of the thermoplastic elastomer would reach the cutter cut surface in the injection molding stage in the injection molding process wherein the thermoplastic elastomer was injected against the cutter cut surface. Thereafter, the corner material of the example or the comparative example was fusion bonded to the adherend at an injection molding temperature of 230°C and a mold temperature of 50°C to obtain a specimen for the observation of peel state. From the joining area of the specimen obtained as above, a strip having a width of 2 cm was punched, and the strip was subjected to tensile peel test at a stress rate of 200 mm/min to measure bond strength.

### Reference Example 1

### Preparation of thermoplastic elastomer (TPV-1)

20 Parts by weight of a propylene homopolymer (MFR: 13 g/10 min, Tm: 158°C) as an olefin-based resin, 60 parts by weight of an oil-extended ethylene/propylene/5-ethylidene-2-norbornene copolymer rubber (ethylene unit content: 78% by mol, propylene unit content: 22%bymol, iodinevalue: 13, Mooneyviscosity [ML1+4(100°C)]: 74, oil extension quantity: 45 parts by weight of paraffinic process oil (available from Idemitsu Kosan Co., Ltd., trade name: PW-90) based on 100 parts by weight of rubber) as an olefin-based rubber, 20 parts by weight of a propylene/ethylene random copolymer rubber (propylene unit content; 65% by mol, ethylene unit content: 35% by mol, MFR (230°C) : 2.0 g/10 min), 0.3 part by weight of an organic peroxide (available from NOF Corporation, trade name: Perbutyl P) as a crosslinking agent and 0.1 part by weight of ethylene glycol dimethacrylate as a crosslinking assistant were sufficiently mixed by a Henschel mixer. Thereafter, the mixture was subjected to granulation by the use of an extruder (manufactured by Toshiba Machine Co., Ltd., product number: TEM-50, L/D: 40, cylinder temperature: C1-C2 120°C, C3-C4 140°C, C5-C6 180°C, C7-C8 200°C, C9-C12 200°C, die temperature: 200°C, screw rotational speed: 200 rpm, extrusion rate: 20 kg/hr) with pouring 20 parts by weight of a paraffinic process oil (available from Idemitsu Kosan Co. , Ltd., trade name: PW-90) into the cylinder, to obtain pellets of a thermoplastic elastomer composition (TPV-1).

### Example 1

70 Parts by weight of an oil-extended ethylene/propylene/5-ethylidene-2-norbornene copolymer rubber (referred to as "EPT-1" hereinafter) obtained by oil-extending 100 parts by weight of an ethylene/propylene/5-ethylidene-2-norbornene copolymer rubber (a) (ethylene unit content: 78% by mol, propylene unit content: 22% by mol, iodine value: 13, Mooney viscosity [ML₁₊₄(100°C)]: 74) by 40 parts by weight of a paraffinic process oil (available from Idemitsu Kosan Co., Ltd., trade name: PW-90) which was a softener (C), 30 parts by weight of a propylene/ethylene random copolymer (MFR (ASTM D 1238, 230°C, load of 2.16 kg) : 10.0 g/10 min, melting point (Tm): 140°C) (referred to as "PP-1" hereinafter) as an olefin-based plastic (b-1), 0.01 part by weight of an antioxidant (available from ADEKA Corporation, trade name: Adeka Stab AO-60), 0.3 part by weight of an organic peroxide (available from NOF Corporation, trade name: Perbutyl P) as a crosslinking agent and 0.1 part by weight of ethylene glycol dimethacrylate (available from Sanshin Chemical Industry Co, Ltd., trade name: San Ester EG) as a crosslinking assistant were sufficiently mixed by a Henschel mixer. The mixture was subjected to granulation by the use.of an extruder (manufactured by Toshiba Machine Co., Ltd., product number: TEM-50, L/D: 40, cylinder temperature: C1-C2 120°C, C3-C4 140°C, C5-C6 180°C, C7-C8 200°C, C9-C12 200°C, die temperature: 200°C, screw rotational speed: 200 rpm, extrusion rate: 20 kg/hr) with pouring 20 parts by weight of a paraffinic process oil (available from Idemitsu Kosan Co., Ltd., trade name: PW-90) as a softener (c) into the cylinder, to obtain pellets of a thermoplastic elastomer composition (D).

100 Parts of the resulting pellets of the thermoplastic elastomer composition (D) and 0.1 part of non-melting type aluminum hydroxy-di-p-t-butylbenzoate (available from Shell Japan Co., Ltd., trade name: Al-PTBBA#500) (referred to as "e-1" hereinafter) as a crystallization nucleating agent (e) were mixed to prepare a molded strip for the measurement of bond strength to TPV-1 which was an adherend. The results are set forth in Table 1-1.

### Example 2

A molded strip was prepared in the same manner as in Example 1, except that as a crystallization nucleating agent (e), non-melting type sodium methylenebis (2,4-di-t-butylphenyl)phosphate (available from ADEKA Corporation, ADK STAB NA-11) (referred to as "e-2" hereinafter) was used instead of e-1. The results are set forth in Table 1-1.

### ] Example 3

A molded strip was prepared in the same manner as in Example 1, except that as a crystallization nucleating agent (e), melting type bis(4-methylbenzylidene)sorbitol (available from New Japan Chemical Co., Ltd., trade name: Gelall MD) (referred to as "e-3" hereinafter) was used instead of e-1. The results are set forth in Table 1-1.

### Example 4

A molded strip was prepared in the same manner as in Example 1, except that as a crystallization nucleating agent (e), a non-melting type rosin-based crystallization nucleating agent (available from Arakawa Chemical Industries, Ltd. , trade name: Pine Crystal KM-5000) (referred to as "e-4 " hereinafter) wasusedinsteadofe-1. Theresults are set forth in Table 1-1.

### Example 5

A molded strip was prepared in the same manner as in Example 1, except that PP-1 was used in an amount of 20 parts by weight, and as an olefin-based plastic (b-2), a propylene homopolymer (MFR (ASTM D 1238, 230°C, load of 2.16 kg): 11.0 g/10 min, melting point (Tm): 160°C) (referred to as "PP-2" hereinafter) was used in an amount of 10 parts by weight. The results are set forth in Table 1-1.

### Example 6

A molded strip was prepared in the same manner as in Example 1, except that PP-1 was used in an amount of 20 parts by weight, and as an olefin-based plastic (b-2), a propylene/ethylene block copolymer (MFR (ASTM D 1238, 230°C, load of 2.16 kg): 11.0 g/10 min, ethylene fraction: 5%, melting point (Tm): 160°C) (referred to as "PP-3" hereinafter) was used in an amount of 10 parts by weight. The results are set forth in Table 1-1.

### Example 7

A molded strip was prepared in the same manner as in Example 5, except that as a crystallization nucleating agent (e), e-2 was used in an amount of 0.1 part by weight instead of e-1. The results are set forth in Table 1-1.

### Example 8

A molded strip was prepared in the same manner as in Example 5, except that as a crystallization nucleating agent (e), e-3 was used in an amount of 0.1 part by weight instead of e-1. The results are set forth in Table 1-1.

### Example 9

A molded strip was prepared in the same manner as in Example 5, except that as a crystallization nucleating agent (e), e-4 was used in an amount of 0.1 part by weight instead of e-1. The results are set forth in Table 1-1.

### Example 10

A molded strip was prepared in the same manner as in Example 1, except that e-1 was used in an amount of 0.05 part by weight. The results are set forth in Table 1-1.

### Example 11

A molded strip was prepared in the same manner as in Example 1, except that e-1 was used in an amount of 1 part by weight. The results are set forth in Table 1-2.

### Example 12

A molded strip was prepared in the same manner as in Example 1, except that e-1 was used in an amount of 2 parts by weight. The results are set forth in Table 1-2.

### Example 13

A molded strip was prepared in the same manner as in Example 1, except that e-1 was used in an amount of 5 parts by weight. The results are set forth in Table 1-2.

### Example 14

A molded strip was prepared in the same manner as in Example 1, except that e-1 was used in an amount of 0.05 part by weight, and e-2 was used in an amount of 0.05 part by weight. The results are set forth in Table 1-2.

### Example 15

A molded strip was prepared in the same manner as in Example 1, except that e-1 was added in the mixing stage using a Henschel mixer. The results are set forth in Table 1-2.

### Example 16

A molded strip was prepared in the same manner as in Example 1, except that a blowing agent (available from Eiwa Chemical Ind. Co., Ltd., trade name: Cellborn SC-P) was mixed together with e-1. The results are set forth in Table 1-2.

### Example 17

A molded strip was prepared in the same manner as in Example 1, except that EPT-1 was used in an amount of 90 parts by weight, PP-1 was used in an amount of 10 parts by weight, and the softener (c) poured was used in an amount of 40 parts by weight. The results are set forth in Table 1-2.

### Example 18

A molded strip was prepared in the same manner as in Example 1, except that EPT-1 was used in an amount of 80 parts by weight, PP-1 was used in an amount of 20 parts by weight, and the softener (c) poured was used in an amount of 20 parts by weight. The results are set forth in Table 1-2.

### Example 19

A molded strip was prepared in the same manner as in Example 1, except that EPT-1 was used in an amount of 60 parts by weight, PP-1 was used in an amount of 40 parts by weight, and the softener (c) poured was used in an amount of 20 parts by weight. The results are set forth in Table 1-2.

### Comparative Example 1

A molded strip was prepared in the same manner as in Example 1, except that e-1 was not used. However, sink mark occurred. The results are set forth in Table 2.

### Comparative Example 2

A molded strip was prepared in the same manner as in Example 1, except that PP-2 was used instead of PP-1. However, the bond/peel strength was low. The results are set forth in Table 2.

### Comparative Example 3

A molded strip was prepared in the same manner as in Example 1, except that e-1 was used in an amount of 10 parts by weight. However, the bond/peel strength was low. The results are set forth in Table 2.

### Comparative Example 4

A molded strip was prepared in the same manner as in Example 17, except that e-1 was not used. However, sink mark occurred. The results are set forth in Table 2.

### Comparative Example 5

A molded strip was prepared in the same manner as in Example 18, except that e-1 was not used. However, sink mark occurred. The results are set forth in Table 2.

### Comparative Example 6

A molded strip was prepared in the same manner as in Example 19, except that e-1 was not used. However, sink mark occurred. The results are set forth in Table 2.

### Comparative Example 7

A molded strip was prepared in the same manner as in Example 16, except that e-1 was not used. However, sink mark occurred. The results are set forth in Table 2.

**Table 1-1**

| Examples | Ex.1 | Ex. 2 | Ex. 3 | Ex. 4 | Ex.5 | Ex. 6 | Ex. 7 | Ex. 8 | Ex. 9 | Ex. 10 |
|---|---|---|---|---|---|---|---|---|---|---|
| EPT-1 (a) | 70 | 70 | 70 | 70 | 70 | 70 | 70 | 70 | 70 | 70 |
| PP-1 (b-1) | 30 | 30 | 30 | 30 | 20 | 20 | 20 | 20 | 20 | 30 |
| PP-2 (b-2) | | | | | 10 | | 10 | 10 | 10 | |
| PP-3 (b-3) | | | | | | 10 | | | | |
| Antioxidant | 0.01 | 0.01 | 0.01 | 0.01 | 0.01 | 0.01 | 0.01 | 0.01 | 0.01 | 0.01 |
| Crosslinking agent | 0.3 | 0.3 | 0.3 | 0.3 | 0.3 | 0.3 | 0.3 | 0.3 | 0.3 | 0.3 |
| Crosslinking assistant | 0.1 | 0.1 | 0.1 | 0.1 | 0.1 | 0.1 | 0.1 | 0.1 | 0.1 | 0.1 |
| Softener (c) | 20 | 20 | 20 | 20 | 20 | 20 | 20 | 20 | 20 | 20 |
| Crystallization nucleating agent (e-1) | 0.1 | | | | 0.1 | 0.1 | | | | 0.05 |
| Crystallization nucleating agent (e-2) | | 0.1 | | | | | 0.1 | | | |
| Crystallization nucleating agent (e-3) | | | 0.1 | | | | | 0.1 | | |
| Crystallization nucleating agent (e-4) | | | | 0.1 | | | | | 0.1 | |
| Mixing of crystallization nucleating agent | molding stage | molding stage | molding stage | molding stage | molding stage | molding stage | molding stage | molding stage | molding stage | molding stage |
| Blowing agent | | | | | | | | | | |
| MFR (g/10min) | 10 | 10 | 10 | 10 | 5 | 6 | 5 | 5 | 5 | 10 |
| Hardness | 75 | 75 | 75 | 75 | 79 | 78 | 79 | 79 | 79 | 75 |
| Tensile strength (MPa) | 5.7 | 5.7 | 5.7 | 5.7 | 6.5 | 6.4 | 6.5 | 6.5 | 6.5 | 5.7 |
| Tensile elongation (%) | 380 | 380 | 380 | 380 | 390 | 420 | 390 | 390 | 390 | 380 |
| Compression set (%) | 49 | 49 | 49 | 49 | 48 | 47 | 48 | 48 | 48 | 49 |
| Tm (°C) | 135 | 135 | 135 | 135 | 135 | 135 | 135 | 135 | 135 | 135 |
| Tc (°C) | 105 | 105 | 105 | 105 | 115 | 115 | 115 | 115 | 115 | 105 |
| Evaluationof sink mark | A | A | A | A | A | A | A | A | A | A |
| Bond/peel strength (MPa) | 4.5 | 4.5 | 4.5 | 4.5 | 4.6 | 4.4 | 4.6 | 4.6 | 4.6 | 4.7 |

**Table 1-2**

| Examples | Ex.11 | Ex. 12 | Ex. 13 | Ex. 14 | Ex.15 | Ex. 16 | Ex. 17 | Ex. 18 | Ex. 19 |
|---|---|---|---|---|---|---|---|---|---|
| EPT-1 (a) | 70 | 70 | 70 | 70 | 70 | 70 | 90 | 80 | 60 |
| PP-1 (b-1) | 30 | 30 | 30 | 30 | 30 | 30 | 10 | 20 | 40 |
| PP-2 (b-2) | | | | | | | | | |
| PP-3 (b-3) | | | | | | | | | |
| Antioxidant | 0.01 | 0.01 | 0.01 | 0.01 | 0.01 | 0.01 | 0.01 | 0.01 | 0.01 |
| Crosslinking agent | 0.3 | 0.3 | 0.3 | 0.3 | 0.3 | 0.3 | 0.3 | 0.3 | 0.3 |
| Crosslinking assistant | 0.1 | 0.1 | 0.1 | 0.1 | 0.1 | 0.1 | 0.1 | 0.1 | 0.1 |
| Softener (c) | 20 | 20 | 20 | 20 | 20 | 20 | 40 | 20 | 20 |
| Crystallization nucleating agent (e-1) | 1 | 2 | 5 | 0.05 | 0.1 | 0.1 | 0.1 | 0.1 | 0.1 |
| Crystallization nucleating agent (e-2) | | | | 0.05 | | | | | |
| Crystallization nucleating agent (e-3) | | | | | | | | | |
| Crystallization nucleating agent (e-4) | | | | | | | | | |
| Mixing of crystallization nucleating agent | molding stage | molding stage | molding stage | molding stage | mixing stage by Henschel mixer | moldin g stage | molding stage | molding stage | molding stage |
| Blowing agent | | | | | | | | | |
| MFR (g/10min) | 10 | 10 | 10 | 10 | 10 | 0.1 | 2 | 20 | 30 |
| Hardness | 75 | 75 | 75 | 75 | 75 | 75 | 40 | 60 | 90 |
| Tensile strength (MPa) | 5.7 | 5.7 | 5.7 | 5.7 | 5.7 | 5.7 | 3.0 | 4.0 | 7.0 |
| Tensile elongation (%) | 380 | 380 | 380 | 380 | 380 | 380 | 300 | 350 | 400 |
| Compression set (%) | 49 | 49 | 49 | 49 | 49 | 49 | 29 | 32 | 55 |
| Tm (°C) | 135 | 135 | 135 | 135 | 135 | 135 | 135 | 135 | 135 |
| Tc (°C) | 105 | 105 | 105 | 105 | 105 | 105 | 105 | 105 | 105 |
| Evaluation of sink mark | A | A | A | A | A | A | A | A | A |
| Bond/peel strength (MPa) | 4.4 | 4.3 | 4.0 | 4.5 | 4.5 | 4.2 | 1.9 | 3.0 | 6.5 |

**Table 2**

| Comparative Examples | Comp. Ex.1 | Comp. Ex. 2 | Comp. Ex. 3 | Comp. Ex. 4 | Comp. Ex.5 | Comp. Ex. 6 | Comp. Ex. 7 |
|---|---|---|---|---|---|---|---|
| EPT-1 (a) | 70 | 70 | 70 | 90 | 80 | 60 | 70 |
| PP-1 (b-1) | 30 | | 30 | 10 | 20 | 40 | 30 |
| PP-2 (b-2) | | 30 | | | | | |
| PP-3 (b-3) | | | | | | | |
| Antioxidant | 0.01 | 0.01 | 0.01 | 0.01 | 0.01 | 0.01 | 0.01 |
| Crosslinking agent | 0.3 | 0.3 | 0.3 | 0.3 | 0.3 | 0.3 | 0.3 |
| Crosslinking assistant | 0.1 | 0.1 | 0.1 | 0.1 | 0.1 | 0.1 | 0.1 |
| Softener (c) | 20 | 20 | 20 | 40 | 20 | 20 | 20 |
| Crystallization nucleating agent (e-1) | | 0.1 | 10 | | | | |
| Crystallization nucleating agent (e-2) | | | | | | | |
| Crystallization nucleating agent (e-3) | | | | | | | |
| Crystallization nucleating agent (e-4) | | | | | | | |
| Mixing of crystallization nucleating agent | molding stage | molding stage | molding stage | molding stage | molding stage | molding stage | molding stage |
| Blowing agent | | | | | | | 0.1 |
| MFR (g/10min) | 10 | 9 | 10 | 2 | 20 | 30 | 10 |
| Hardness | 75 | 81 | 75 | 40 | 60 | 90 | 75 |
| Tensile strength (MPa) | 5.7 | 6.9 | 5.7 | 3.0 | 4.0 | 7.0 | 5.7 |
| Tensile elongation (%) | 380 | 400 | 380 | 300 | 350 | 400 | 380 |
| Compression set (%) | 49 | 47 | 49 | 29 | 32 | 55 | 49 |
| Tm (°C) | 135 | 155 | 135 | 135 | 135 | 135 | 135 |
| Tc (°C) | 95 | 115 | 130 | 95 | 95 | 95 | 95 |
| Evaluation of sink mark | C | A | A | C | C | C | C |
| Bond/peel strength (MPa) | 4.5 | 0.9 | 0.9 | 1.9 | 3.0 | 6.5 | 4.2 |

## Claims

1. A process for preparing a thermoplastic elastomer composition (F) for injection molding, comprising dynamically heat-treating a thermoplastic elastomer composition (D) in the presence of an organic peroxide, said thermoplastic elastomer composition (D) comprising:
95 to 5 parts by weight of an ethylene/α-olefin-based copolymer rubber (a),
5 to 95 parts by weight of a propylene/α-olefin random copolymer (b-1) (the total of said components (a) and (b-1) being 100 parts by weight), and
0 to 200 parts by weight of a softener (c),
wherein a crystallization nucleating agent (e) forolefin-based plastics is added in an amount of 0.01 to 5 parts by weight based on 100 parts by weight of the total of the components (a) and (b-1) before or after the dynamic heat treatment.

2. The process for preparing a thermoplastic elastomer composition (F) for injection molding as claimed in claim 1, wherein the thermoplastic elastomer composition (D) contains the softener (c) in an amount of 1 to 200 parts by weight.

3. The process for preparing a thermoplastic elastomer composition (F) for injection molding as claimed in claim 1 or 2,
wherein the ethylene/α-olefin-based copolymer rubber (a) is a rubber having been partially or completely crosslinked.

4. The process for preparing a thermoplastic elastomer composition (F) for injection molding as claimed in any one of claims 1 to 3, wherein the propylene unit content in the propylene/α-olefin random copolymer (b-1) is not less than 50% by weight.

5. The process for preparing a thermoplastic elastomer composition (F) for injection molding as claimed in any one of claims 1 to 4, wherein the thermoplastic elastomer composition (D) further contains a propylene-based polymer (b-2) in addition to the propylene/α-olefin random copolymer (b-1).

6. The process for preparing a thermoplastic elastomer composition (F) for injection molding as claimed in claim 5, wherein the propylene-based polymer (b-2) is a propylene homopolymer or a block copolymer of propylene and an α-olefin.

7. The process for preparing a thermoplastic elastomer composition (F) for injection molding as claimed in claim 5 or 6, wherein the propylene/α-olefin random copolymer (b-1) and the propylene-based polymer (b-2) are contained in a weight ratio of 99-5/1-95.

8. A thermoplastic elastomer composition (F) for injection molding, which is prepared by the process for preparing a thermoplastic elastomer composition (F) for injection molding of any one of claims 1 to 7.

9. A molded product comprising the thermoplastic elastomer composition (F) of claim 8.

10. The molded product as claimed in claim 9, which is a foamed product.

11. The molded product as claimed in claim 9 or 10, which has been joined to a vulcanized rubber molded product which may have been foamed and/or a thermoplastic elastomer molded product which may have been foamed.

12. A thermoplastic elastomer composition (F) for injection molding, which is a thermoplastic elastomer composition (F) for injection molding obtained by adding a crystallization nucleating agent (e) for olefin-based plastics to a thermoplastic elastomer composition (D) comprising:
95 to 5 parts by weight of an ethylene/α-olefin-based copolymer rubber (a),
5 to 95 parts by weight of a propylene/α-olefin random copolymer (b-1) (the total of said components (a) and (b-1) being 100 parts by weight), and
0 to 200 parts by weight of a softener (c),
in an amount of 0.01 to 5 parts by weight based on 100 parts by weight of the total of the components (a) and (b-1), and
which has the largest peak value of a melting point, as measured by a differential scanning calorimeter (DSC), of 100 to 150°C, and
a crystallization temperature peak of not lower than 100°C.

13. The thermoplastic elastomer composition (F) for injection molding as claimed in claim 12, wherein the thermoplastic elastomer composition (D) contains the softener (c) in an amount of 1 to 200 parts by weight.

14. The thermoplastic elastomer composition (F) for injection molding as claimed in claim 12 or 13, wherein the ethylene/α-olefin-based copolymer rubber (a) is a rubber having been partially or completely crosslinked.

15. The thermoplastic elastomer composition (F) for injection molding as claimed in any one of claims 12 to 14, wherein the propylene unit content in the propylene/α-olefin random copolymer (b-1) is not less than 50% by weight.

16. The thermoplastic elastomer composition (F) for injection molding as claimed in any one of claims 12 to 15, wherein the thermoplastic elastomer composition (D) further contains a propylene-based polymer (b-2) in addition to the propylene/α-olefin random copolymer (b-1).

17. The thermoplastic elastomer composition (F) for injection molding as claimed in claim 16, wherein the propylene-based polymer (b-2) is a propylene homopolymer or a block copolymer of propylene and an α-olefin.

18. The thermoplastic elastomer composition (F) for injection molding as claimed in claim 16 or 17, wherein the propylene/α-olefin random copolymer (b-1) and the propylene-based polymer (b-2) are contained in a weight ratio of 99-5/1-95.

19. A molded product comprising the thermoplastic elastomer composition (F) of any one of claims 12 to 18.

20. The molded product as claimed in claim 19, which is a foamed product.

21. The molded product as claimed in claim 19 or 20, which has been joined to a vulcanized rubber molded product which may have been foamed and/or a thermoplastic elastomer molded product which may have been foamed.
